(19) Europäisches Patentamt
European Patent Office
Office européen des brevets

(11) **EP 1 778 597 B1**

(12) **EUROPEAN PATENT SPECIFICATION**

(45) Date of publication and mention
of the grant of the patent:
**09.10.2013 Bulletin 2013/41**

(21) Application number: **05757928.6**

(22) Date of filing: **23.06.2005**

(51) Int Cl.:
***C03B 37/014*** (2006.01)

(86) International application number:
**PCT/FI2005/050239**

(87) International publication number:
**WO 2006/003253 (12.01.2006 Gazette 2006/02)**

(54) **METHOD FOR PRODUCING AN OPTICAL WAVEGUIDE MATERIAL**

VERFAHREN ZUM HERSTELLEN EINES OPTISCHEN WELLENLEITERMATERIALS

PROCEDE DE FABRICATION D'UN MATERIAU DE GUIDE D'ONDES OPTIQUES

(84) Designated Contracting States:
**AT BE BG CH CY CZ DE DK EE ES FI FR GB GR HU IE IS IT LI LT LU MC NL PL PT RO SE SI SK TR**

(30) Priority: **02.07.2004 FI 20045264**

(43) Date of publication of application:
**02.05.2007 Bulletin 2007/18**

(73) Proprietor: **Liekki Oy**
**08500 Lohja AS (FI)**

(72) Inventors:
• **JANKA, Kauko**
**FI-33720 Tampere (FI)**
• **RAJALA, Markku**
**FI-01280 Vantaa (FI)**

• **TIKKANEN, Juha**
**FI-33700 Tampere (FI)**

(74) Representative: **Rahkonen, Erkki Juhani et al**
**Tampereen Patenttitoimisto Oy**
**Hermiankatu 1 B**
**33720 Tampere (FI)**

(56) References cited:
**WO-A-00/20346        WO-A-02/46112**
**WO-A-2004/002907    US-A- 4 003 692**
**US-A- 6 079 225       US-A1- 2003 167 796**
**US-B1- 6 363 746      US-B1- 6 672 106**

• **PATENT ABSTRACTS OF JAPAN vol. 004, no. 007 (C-070), 19 January 1980 (1980-01-19) -& JP 54 142317 A (HITACHI LTD), 6 November 1979 (1979-11-06)**

**Description**

The present invention relates to a method for producing light-amplifying optical material, said method comprising at least atomizing at least one reactant in liquid form by an atomizing gas to form droplets, introducing said droplets and/or their vaporous products into a flame, oxidizing said at least one reactant to form one or more, condensing said one or more oxides to produce particles, collecting at least a part of said particles, and fusing said particles together to form said light-amplifying optical material.

BACKGROUND OF THE INVENTION

Generation of small particles is an important step in the production of light-amplifying optical waveguides, which amplify light by stimulated emission of radiation. The light-amplifying properties of those waveguides are achieved by doping, for example, amorphous quartz glass with suitable dopants, for example with erbium.

Doped quartz glass can be produced by generating small particles by synthesis in a flame. US Patent 6,565,823 discloses a method and an apparatus for forming fused silica by combustion of liquid reactants. Liquid siloxane feedstock is delivered as a liquid solution to a conversion site, which may be, for example, a methane-oxygen flame. The feedstock is atomized with the assistance of a gas to form a dispersion of liquid droplets. The droplets are evaporated and the siloxane is decomposed and oxidized in the flame to form supersaturated silica vapor. The saturated vapor pressure of silica is low even at the high temperatures of the flame. Consequently, the supersaturated vapor is rapidly nucleated and condensed generating a number of small silica particles. The particles are collected on a mandrel to form a waveguide preform. A waveguide is subsequently produced from the preform by a process comprising heating and drawing.

Due to differences in the saturated vapor pressures of required reactants, it may be advantageous to introduce reactants with low saturated vapor pressure into the flame as atomized liquid droplets. The process of forming small droplets by aerodynamic and/or shear forces caused by a gas stream acting on a liquid surface is called atomization.

It is a known fact in the area of atomization, that small liquid droplets may be produced using a high velocity of the atomizing gas. However, it is known in the area of producing light-amplifying materials, that it is critical for the optical and mechanical properties of the material, that the properties of the produced material particles are as homogeneous as possible. Consequently, particles are typically synthetized in a flame, which does not exhibit large spatial and temporal variations of temperature and local gas composition. Therefore the tendency has been to minimize the turbulence of the flame in order to achieve a reaction zone, which is spatially and temporally uniform and preferably laminar. It is known that high gas velocities induce turbulence, which in turn is associated with chaotic spatial and temporal variations of temperature and local gas composition. The requirement to obtain well-controlled uniform properties of the flame has set a limit to the velocity of the atomizing gas.

Another aspect is that a long residence time in the flame is known to favor complete evaporation of the droplets and to ensure reaction times, which are long enough for oxidation and the formation of desired compounds. It is known that the residence times are proportional to the length of the flame and inversely proportional to the velocity of the gas or the droplets.

US Patent 6,565,823 teaches that in a most preferred embodiment high velocity gas is utilized in atomizing a liquid feedstock, which gas produces atomized liquid projections with a velocity in the range of 0,5 to 50 m/s. Further, using a gas flow rate and minimum diameter values  indicated on column 10, lines 1 to 11 of said patent, a velocity in the order of 50 m/s can be calculated for said atomizing high velocity gas.

Patent application PCT/F199/00818 (WO 00/20346) teaches in a similar fashion, that for effective atomization, it is preferable to make the velocity of the spraying gas as high as possible. However, no numerical values are given for said velocity.

US Patent 6,672,106 discloses a modification of the system described in the US Patent 6,565,823. The US Patent 6,672,106 teaches that by using said modification and by using oxygen as the atomizing gas, the velocity of the atomizing gas stream can be reduced by at least 50%.

In addition, the US Patent 6,672,106 teaches that by using lower atomizing gas velocities, turbulence is reduced at the reaction zone, and thus the particle deposition rate is greatly improved. A reduction in gas velocity is also taught to reduce so called blank defects, which are detrimental to the optical and mechanical properties of the produced waveguides.

WO 2004/002907 discloses a method for the preparation of doped glass particles by oxidizing base materials and dopants in a reactor. According to WO 2004/002907, the base materials and the dopants are guided to the reactor in the vaporous form.

US 6,079,225 discloses a method for the production a quartz glass blank, wherein glass-forming base material in liquid form is vaporized or atomized using atomizing gas which is fed through a widening nozzle. The glass-forming base material may be suctioned by a low pressure created by the vaporizing gas. US 6,079,225 does not disclose producing light-amplifying optical material.

US 4003692 discloses an oil/gas burner having means to rotationally spin combustion air. US 4003692 does not disclose producing light-amplifying optical material.

BRIEF DESCRIPTION OF THE INVENTION

It is an object of the present invention to provide a method for producing light-amplifying optical material, which has homogenous composition and small size.

To attain these objects, the method according to the present invention is mainly characterized in that atomizing gas atomizing a reactant in liquid form is discharged at a velocity, which is in the range of 0.3 to 1.5 times the velocity of sound. Other preferred embodiments of the invention are described in the dependent claims.

According to the present invention, homogeneous particles suitable for producing optical waveguides are achieved by maximizing turbulence in the flame. Thus, the approach according to the present invention is different from the approach used in the prior art.

The flame becomes highly turbulent and the rates of mixing, heating and cooling are greatly enhanced. Thanks to efficient mixing, the generation of heat, the reactions and the condensation of the particles take place fast and essentially in the same volume within the flame, which improves the control of the particle production process.

By applying a high velocity of the atomizing gas several advantageous effects take place: The average size of the atomized droplets becomes small thanks to the high velocity of the atomizing gas. The atomized droplets are rapidly transferred to the flame. The high velocity of the atomizing gas enhances turbulence and mixing of the reactants in the flame. Thanks to effective mixing the reaction rates are high. The high rate of combustion leads to high combustion temperature, which further accelerates the rates of oxidation and doping reactions and accelerates gas velocity in the flame. Thanks to the high temperature and small droplet size, the droplets are evaporated rapidly in the flame. The dimensions of the flame are shrunk thanks to the high reaction rates. Turbulence enhances also mixing of cold gas to the reaction gases reducing the effective residence times even further. Thanks to the high  gas velocity and small dimensions, the residence time of the substances in the flame are reduced. The low residence times reduce the agglomeration of the droplets and the produced particles.

The turbulent flame is not sensitive to disturbances. Therefore the production capacity of the device and the method for producing light-amplifying optical material can be scaled up by arranging several devices to operate adjacent to each other.

The residence time of the reaction products in the flame is short. Thus particles comprising nonequilibrium chemical products can be produced. For example, the separation of different phases in the produced material and the undesired clustering of erbium ions are minimized, which improves the homogeneity of the produced particles.

This is advantageous especially in the production of particles suitable for manufacturing of light- amplifying optical waveguides. For example, in case of doping with erbium, the aim is to have single and isolated erbium ions in the material. Clustered forms of erbium are not effective in the amplification of light. Erbium has a tendency to form $Er_2O_3$ in the gas phase, if sufficient time is available to reach thermodynamical equilibrium. In an Al- Si- O system erbium has a tendency to form $Al_5Er_3O_{12}$- $Al_2O_3$, respectively. According to the invention, the formation of the erbium ion clusters can be minimized by limiting the residence time of the particles in the flame, which is achieved by applying the high velocity of the atomizing gas.

Because the clustering of the active ions is substantially minimized, it is possible to increase the concentration of said ions in the produced light-amplifying material, which consequently leads to high quantum conversion efficiency. Thus, erbium-doped optical waveguide produced according to the present invention has excellent light-amplifying characteristics. For example, an Er-doped fiber produced according to the present invention was found to provide a quantum conversion efficiency of 65%.

BRIEF DESCRIPTION OF THE DRAWINGS

Fig. 1a    shows a schematic side cross-sectional view of a burner assembly,

Fig. 1b    shows a schematic axial view of the burner assembly of Fig. 1a,

Fig. 2     is a schematic representation of the production and collection of particles in accordance with the present invention,

Fig. 3a    is a schematic representation of a device for producing an optical waveguide preform,

Fig. 3b    is a schematic representation of drawing an optical waveguide from an optical waveguide preform,

Fig. 4    is a flow chart of the production of an optical waveguide in accordance with the present invention,

Fig. 5    shows a schematic side cross-sectional view of a burner assembly with an annular Laval nozzle,

Fig. 6a    shows a schematic side cross-sectional view off a burner assembly with a Laval nozzle and with two transverse liquid nozzles,

Fig. 6b    shows a schematic axial view of the burner assembly of Fig. 6a,

Fig.7a    shows a schematic side cross-sectional view of a burner assembly with a plurality of liquid nozzles,

Fig.7b    shows a schematic axial view of the burner assembly of Fig. 7a,

Fig.8    shows a schematic side cross-sectional view of a burner assembly with a further diverging nozzle, and

Fig.9    shows a burner assembly with a swirl-inducing element.

DETAILED DESCRIPTION OF THE INVENTION

The device for making light-amplifying optical material comprises at least a burner assembly, which is used for producing particles of erbium -doped silica glass.

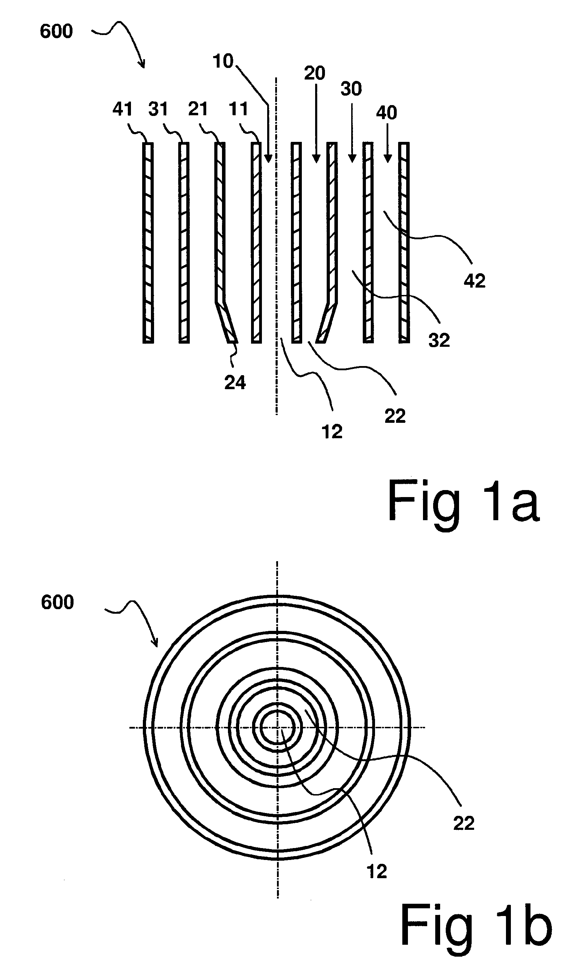

Referring to Figs. 1 a and 1b, the burner assembly 600 comprises four tubes 11, 21, 31, 41, which define four concentric nozzles12, 22, 32, 42. The innermost nozzle, herein called as the liquid nozzle, is used for delivering liquid reactant 10. The outer surface of the tube 11 and the inner surface of the tube 21 define together an annular atomizing gas nozzle 22, from which an atomizing gas 20 is discharged. The atomizing gas is accelerated by a pressure difference prevailing over the nozzle 22. The velocity of the atomizing gas 20 may be further accelerated by the constriction 24 of the nozzle 22. Instead of the constriction 24 of the tube 21, the cross-section may also be reduced by implementing an enlargement of the outer surface of the liquid reactant tube 11. The burner assembly 600 may also comprise more nozzles than depicted in Fig. 1a, for example to deliver inert gas.

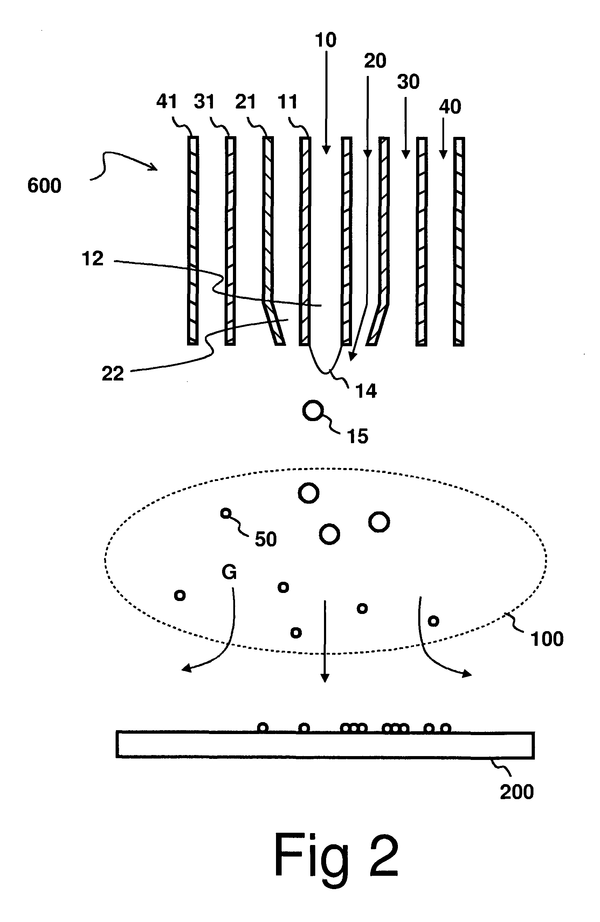

Referring to Fig. 2, there is a liquid surface 14 at the liquid nozzle 12. Shear and aerodynamic forces generated by the stream of the atomizing gas 20 tear droplets 15 from the liquid surface 14 causing atomization. The droplets may be further fragmented by turbulence. The droplets are entrained within the gas jet and accelerated to a high velocity and further entrained into the flame 100.

The reactants delivered by the nozzles 12, 22, 32, 42 are mixed by turbulence and by diffusion. Exothermic reactions of the reactants, especially the oxidation of hydrogen provides the heat required for the flame 100. A high temperature is achieved. The origin of the flame 100 is associated with a position in which the velocity of the flame propagation with respect to the gases is substantially equal to the velocity of the gases.

Due to extensive dilution with surrounding gases, the atomized droplets 15 start to evaporate after atomization. The rate of evaporation is greatly enhanced after mixing with the hot combustion gases in the flame 100. The reactants 10, 20, 30 react and oxidize in the flame 100 by producing oxides and other compounds. The saturated vapor pressures of silicon oxide (silica) and erbium oxides are so low that they are rapidly nucleated and condensed forming doped silica particles 50. The condensation is further promoted by the turbulent mixing of surrounding cool gas with the hot reaction gases, which rapidly decreases the average temperature of the gases.

Preferably, the velocity of the atomizing gas 20 near the liquid surface 14 is in the range of 0.3 to 1.5 times the velocity of sound. The most preferred velocity of the atomizing gas is substantially equal to the velocity of sound.

The velocity of sound $V_s$ is given by the equation:

$$V_S = \sqrt{\frac{p\gamma}{\rho}} \,, \tag{1}$$

in which p denotes gas pressure, $\rho$ denotes gas density and the constant $\gamma$ is given by:

$$\gamma = \frac{c_p}{c_v} . \qquad (2)$$

in which $c_p$ denotes the heat capacity of the gas at constant pressure and $c_v$ denotes the heat capacity of the gas at constant volume. The velocity of sound $V_s$ depends on the gas temperature and on the type of the gas.

The Reynolds number $Re_D$ corresponding to a velocity V is defined as:

$$Re_D = \frac{VD}{\nu} , \qquad (3)$$

in which D is the outer diameter of the liquid nozzle 12 and $\nu$ is the kinematic viscosity of the atomizing gas at the exit end of the atomizing gas nozzle 22.

It is known that a high Reynolds number promotes turbulence. In order to achieve small droplets 15, it is advantageous to select a small diameter of the liquid nozzle 12, which according to the equation (3) requires a high velocity V of the atomizing gas 20.

A pressure ratio R is defined as:

$$R = \frac{p_i}{p_0} , \qquad (4)$$

in which $p_i$ is the static pressure of the atomizing gas 20 inside the atomizing gas nozzle 22 and $p_o$ is the static pressure outside the atomizing gas nozzle. It is known that a substantially sonic velocity, i.e. the velocity of sound may be reached when the pressure ratio R prevailing over the constriction 24 (Fig. 1) has a value in the order of two.

Only velocities up to the velocity of sound can be implemented using nozzles with constant cross section or with converging cross-section. The implementation of the velocities higher than the velocity of sound requires diverging nozzles.

In order to produce erbium-doped silica material, the liquid reactant delivered by the nozzle 12 is preferably erbium chloride and aluminum chloride dissolved in methanol. The atomizing gas delivered by the atomizing gas nozzle 22 is hydrogen. Silicon tetrachloride is delivered by the annular nozzle 32 (Fig. 1) and oxygen is delivered by the annular nozzle 42 (Fig. 1). The role of aluminum chloride is to improve the solubility of erbium in the produced silica glass.

Further, the applicable flow rates in the production of erbium- doped silica are as follows:

- Liquid flow rate through the liquid nozzle 12: 3,6 to 4,5 g/min.
- Gas flow rate through the atomizing gas nozzle 22: 35 to 60 SLPM.
- Gas flow rate through the nozzle 32: 0 to 15 SLPM.
- Gas flow rate through the nozzle 42: 10 to 40 SLPM.

SLPM denotes standard liter per minute.

In the production of erbium-doped silica, the applicable diameters of the nozzles 12, 22 are substantially in the order of a millimeter.

The optimum combination of the flow rates of the reactants 10, 20, 30, 40, the composition of the reactants 10, 20, 30, 40, and the dimensions of the nozzles 12, 22, 32, 42 should be optimized according to the predetermined target properties of the light-amplifying optical material. For example, the predetermined target concentration of erbium ions may be set to correspond an absorption of 10dB/m, 20dB/m or a further predetermined value. The preferred approach is that the optimum flow rates, compositions and dimensions are determined by an experimental procedure known by a person skilled in the art. It is emphasized that a determined approach to apply an atomizing gas velocity in the order of the velocity of sound is required. Typically, a set of experiments has to be carried out, i.e. a single test using a high atomization gas velocity is not likely to provide the optimum parameters.

In general, in order to achieve desired light-amplifying properties of the end-product, the liquid reactant 10 may comprise a compound which may comprise at least one metal selected from the groups IA, IB IIA, IIB IIIA, IIIB, IVA, IVB, VA, and the rare earth series of the periodic table of elements. Especially, the liquid reactant 10 may comprise erbium, ytterbium, neodymium and/or thulium. Silica-forming compounds may also be introduced in liquid form, for example by introducing siloxane. In some applications, one of the reactants may be clean room air. The atomizing gas 20 may be a premixed mixture of a combustible gas and an oxidizing gas, especially a premixed mixture of hydrogen and oxygen.

The flow rate of the liquid reactant 10 is controlled by a metering pump. The flow of the liquid reactant 10 may be partially assisted by a venturi effect generated by the atomizing gas stream 20. The flow rates of the atomizing gas and the gaseous reactants 20, 30, 40 are controlled by thermal mass flow controllers. Silicon tetrachloride is introduced to the reactant 30 using a gas bubbler.

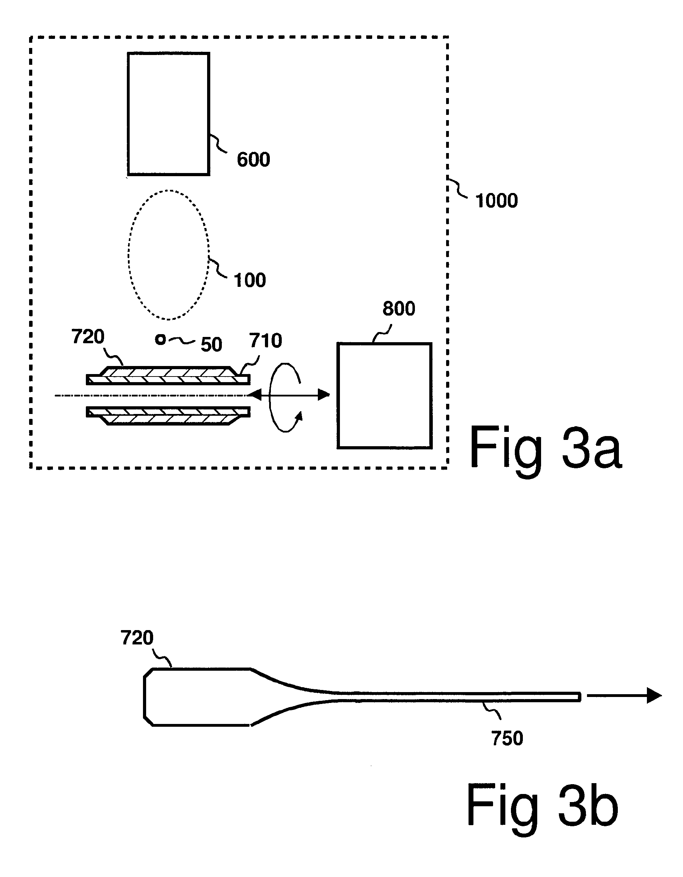

Referring to Fig. 3a, a device 1000 for producing optical waveguide preform comprises a burner assembly 600, a rotating mandrel 710 and a manipulator 800 to rotate and move the mandrel 710 with respect to the burner assembly 600. The doped glass particles are synthetized in the flame 100 and collected on the mandrel 710 to form a preform 720. Also additional glass material may be collected on the preform to provide material for the cladding of optical waveguide to be produced.

The mandrel is removed, and the preform 710 is subsequently inserted into a furnace (not shown) for purification and sintering. Referring to Fig. 3b, the preform is finally heated and drawn to form an optical waveguide 750, using methods and devices known by a person skilled in the art of optical fiber production.

At least a light-amplifying optical fiber with the following parameters can be produced by a method according to the present invention:

- Peak absorption 20 dB/m measured at the wavelength of 1530 nm.
- Core diameter 6 micrometers and cladding diameter 125 micrometers.
- The percentage of erbium ions in clusters in the core material being in the order of 6,5 %

The percentage of erbium ions in clusters can be determined on the basis of the ratio of the spectral transmittance of the optical material measured using a high intensity light source and the spectral transmittance of the optical material measured using a low intensity light source. The measurements are made at the wavelength of 978 nm.

The concentration of clustered erbium ions can also be expressed in a more general way. The percentage of erbium ions in clusters has been found to depend on the concentration of all erbium ions in the produced light-amplifying material. It has been experimentally found, that the percentage of erbium clusters in the light-amplifying optical material produced according to the present invention is typically equal or smaller than the concentration of erbium ions times a factor $4.85 \times 10^{-25}$ $m^3$. Thus, allowing a typical error margin of 20%, the obtainable concentration of clustered erbium ions in produced light-amplifying optical waveguide material is smaller than the square of the concentration of all erbium ions in said light-amplifying optical waveguide multiplied by a factor $6 \times 10^{-27}$ $m^3$.

During the operation, either the substrate 200 and/or the burner assembly 600 may be moved in linear, curved or rotational manner to collect the produced particles 50. The collection of the produced particles 50 is mainly based on thermoforesis. However, also the principles of inertial impaction or collection by electrostatic forces may be applied for collecting the produced particles 50. The device may be contained within an enclosure to maintain high purity of the generated product.

The device 1000 may also be used to produce and collect light-amplifying material on a planar surface, such as the substrate 200 shown in Fig. 2 to form a planar, i.e. a substantially two-dimensional waveguide structure.

A plurality of tubes and or longitudinal rods comprising light-amplifying material may be arranged adjacent next to each other to be heated and drawn to form a so-called photonic optical structure.

An optical component comprising said light-amplifying material may be produced. For example, a light-amplifying rod may be produced by fusing, grinding and polishing processes to be used as a mounted or freestanding component in a laser device.

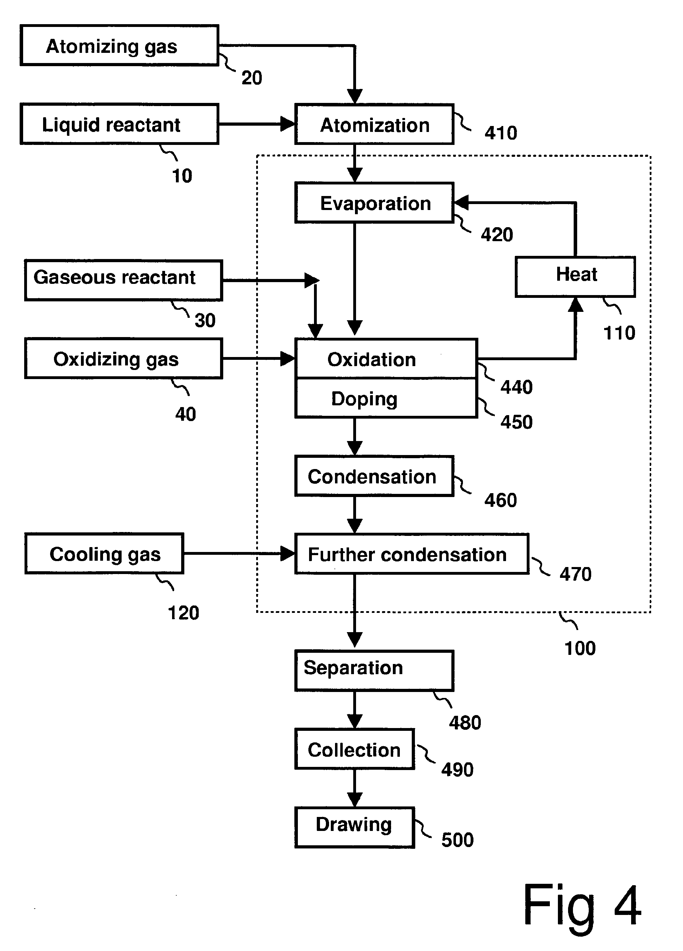

Fig. 4 is a flow chart of the method according to the present invention. The liquid reactant 10 is atomized 410 to droplets 50 in an atomizing step 410 using the atomizing gas 20. The droplets 50 experience evaporation in an evaporation step 420 in the flame 100 and also prior to the introduction into the flame 100 (Fig. 2). The evaporation products, the other gaseous reactants 30 and the oxidizing gas 40 is mixed to the gases causing oxidation in an oxidizing step 440. Doping reactions take place in a doping reaction step 450. Oxidation liberates heat 110, which sustains the temperature of the flame 100 (Fig. 2) and assists the evaporation of the droplets 50, the oxidizing reactions and the doping reactions 450. Supersaturated gas phase oxides are formed, which are rapidly nucleated and condensed to particles in a condensation step 460. External cooling gas 120 may be allowed to mix with the hot reaction gases to further promote condensation in a further condensation step 470. The produced particles 50 are separated from gases in a separation step 480 and collected on the substrate 200 in a collection step 490. The separation step 480 and the collection step 490 take place primarily by thermophoresis.

It is emphasized, that thanks to the efficient mixing in the flame 100 (Fig. 2), especially the oxidation step 440, the doping reactions step 450 and the condensation steps 460, 470 take place at a very fast rate and within a small volume of the flame. Consequently, the residence times of the reactants 10, 20, 30, 40, the reaction products and the particles 50 within the flame are so short, that the reactions leading to clustering of erbium ions and the reactions leading to the separation of the different phases of the doped silica glass do not reach equilibrium. As pointed out before, this is especially beneficial regarding the light-amplifying properties of the produced doped silica.

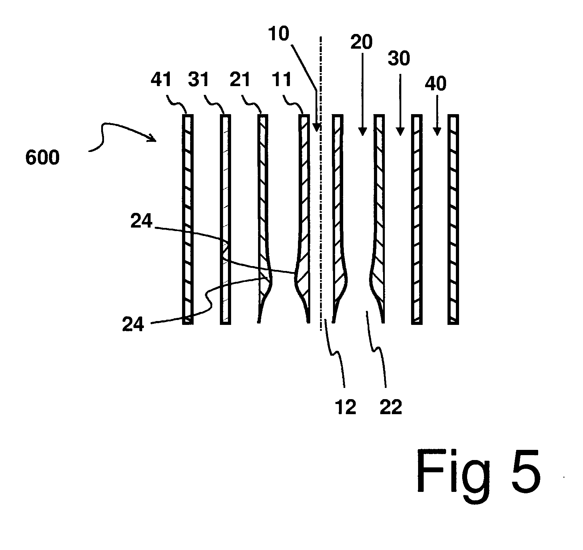

Referring to a burner assembly shown in Fig. 5, the velocity of the atomizing gas jet may be further increased by implementing an annular atomizing gas nozzle 22, which has a diverging cross section, for example a portion with a conically expanding inner surface. Such a nozzle may comprise also a constricted section 24. Preferably the nozzle 22 has the form of a Laval nozzle, which form is shown in Fig. 5. It is known that gas can be accelerated to a supersonic velocity using a Laval nozzle. Supersonic means a velocity, which is higher than the velocity of sound. So-called shock waves often exist in supersonic flows. The origin of the flame 100 (Fig. 2), i.e. the boundary of the flame near the nozzles may be stabilized to a position, which coincides with the position of a shock wave.

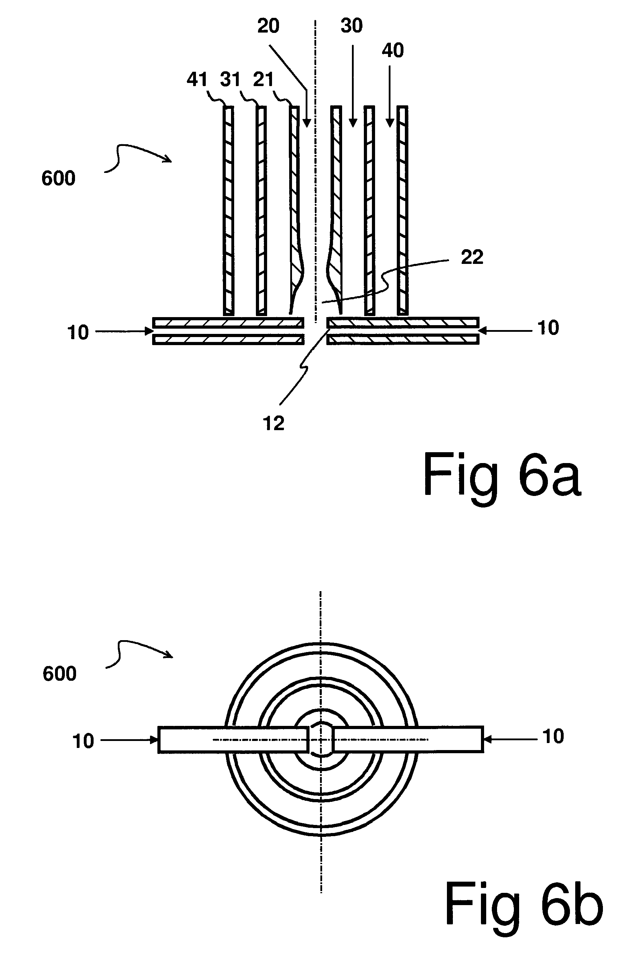

Figs. 6a and 6b show a burner assembly having one or more liquid nozzles 12 arranged according to a perpendicular geometry with respect to the atomizing gas nozzle 22.

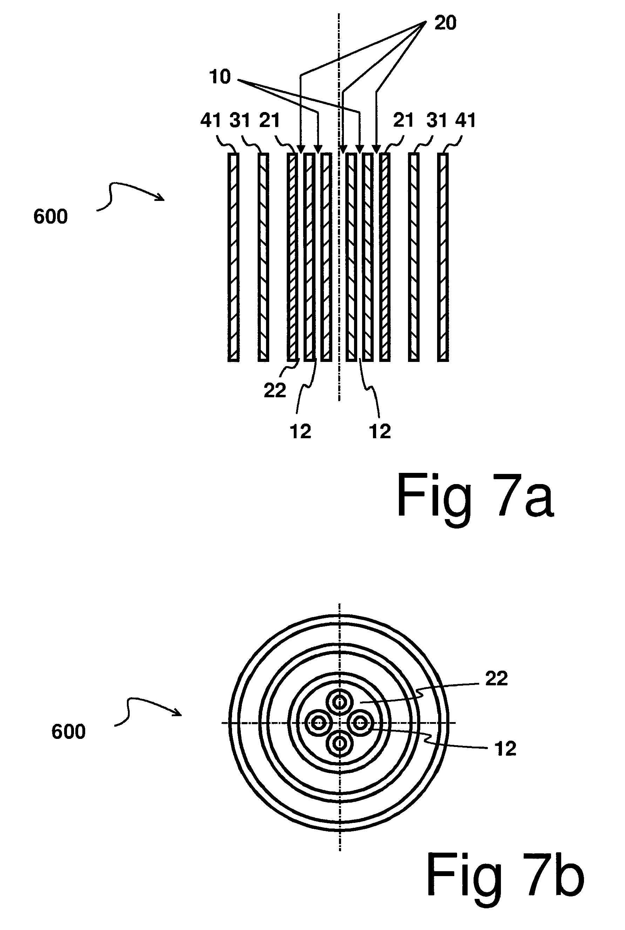

Figs. 7a and 7b show a burner assembly having several liquid nozzles 12 arranged within one atomizing gas nozzle 22. One or more nozzles supplying gaseous reactants may also be arranged within the atomizing gas nozzle 22. This kind of a set-up is advantageous when scaling up the device 1000.

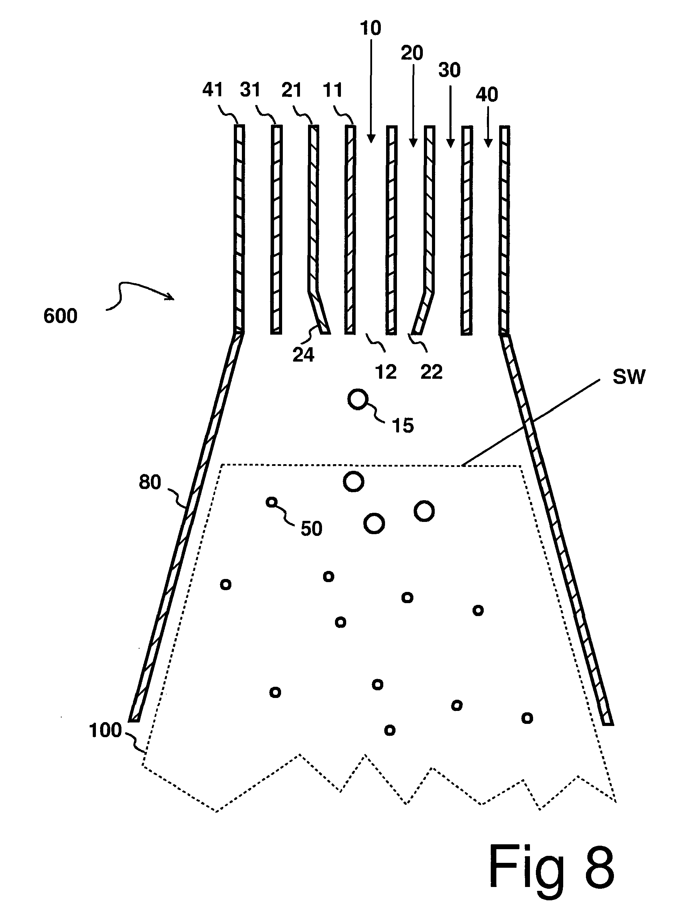

Fig. 8 shows a burner assembly with a further diverging nozzle 80 coupled to the burner assembly 600. Said further diverging nozzle 80 is preferably a Laval nozzle. The velocity of the combustion gases is increased even further, which reduces the reaction times and leads to the formation of even smaller and more homogeneous particles 50. Also adiabatic reduction of the gas temperature may take place in the shock wave SW. The temperature reduction in the shock wave SW is advantageous with regard to the condensation of the particles 50 and stopping of the chemical reactions leading to the formation of ion clusters, for example. A separate combustion chamber (not shown in the figures) may be used before the diverging nozzle 80.

The flame 100 is an intense source of heat. Consequently, the nozzles 12, 22, 32 (Fig. 2), 42 (Fig. 2), 80 may be provided with cooling means to prevent damage of the materials and/or to ensure problem-free flow of reactants. The cooling may be implemented by means of heat transfer medium, for example gas or water. The cooling may also be based on radiative cooling.

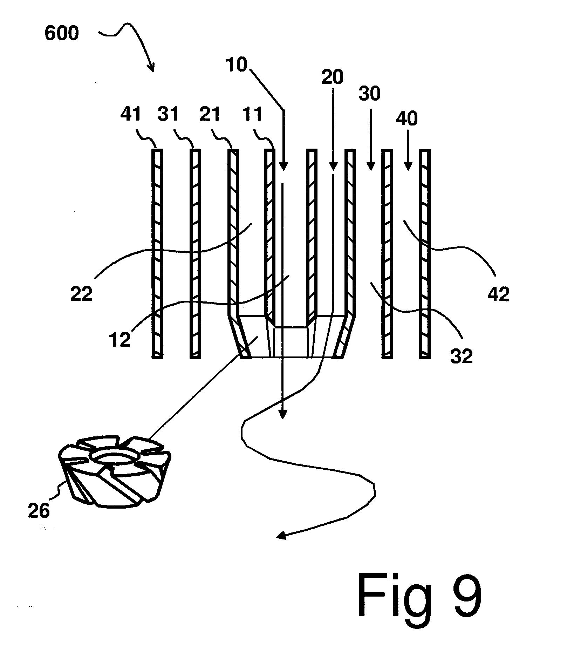

Referring to Fig. 9, One or more of the nozzles 12, 22, 32, 42 may have elements 26 with angular orientation to induce swirling, i.e. rotating motion to the gases. Examples of such swirl-inducing elements are vanes or flanges with tilted slots or tilted holes to modify the direction of gas flow. The nozzles may also comprise perforated or mesh-type elements to enhance turbulence.

The pressure $p_o$ outside device 1000 may be altered by using an enclosure and a gas pump to affect the gas velocities, the particle collection efficiency, heat transfer rates and/or chemical reaction equilibria. Gas cleaning systems may be coupled to the process for example to remove chlorine-containing substances from exhaust gases.

Temperatures, flow rates, pressures, positions of the nozzles and position of the substrate 200 (Fig. 2) are controlled by devices and components known by the person skilled in the art. The temperatures of the substrate 200 and the gases may be monitored by thermocouples and sensors based on emitted or absorbed spectral radiation. The proper form and symmetry of the flame 100 (Fig. 2) may be monitored by an optical imaging system. Image sequences taken with short exposure times may assist in the monitoring of the degree of turbulence of the flame100 and in the monitoring of the atomization process. Spectroscopical and fluorescent properties of the substrate 200 or of the produced material may be monitored on- line to assist in the control of the production of the particles 50.

The atomizing gas 20 and/or reactants may also be supplied by a thermal plasma device, for example by using a direct-current non-transferred plasma torch, which is capable of accelerating the gas to a very high velocity and/or to a high temperature. Such plasma torches are known, for example, in the field of plasma spraying.

For the person skilled in the art, it will be clear that modifications and variations of the device, method and light-amplifying waveguide are perceivable.

## Claims

1.  A method for producing light-amplifying optical material, said method comprising:

    - discharging atomizing gas (20),
    - atomizing at least one reactant (10) in liquid form by said atomizing gas (20) to form droplets (15),
    - introducing said droplets (15) into a flame (100),
    - oxidizing at least one reactant (10, 30) in said flame to form one or more oxides,
    - condensing said one or more oxides to produce particles (50), and

- collecting at least a part of said particles (50), wherein particles (50) of said collected part are fused together to form said light-amplifying optical material,

**characterized in that** said atomizing gas (20) is discharged at a velocity, which is in the range of 0.3 to 1.5 times the velocity of sound.

2. The method according to claim 1, **characterized in that** said method further comprises introducing at least one reactant comprising at least silicon and/or its compound into said flame.

3. The method according to claim 2, **characterized in that** said silicon compound is gaseous silicon tetrachloride.

4. The method according to any of the foregoing claims 1 to 3, **characterized in that** said method further comprises introducing at least one reactant comprising at least one metal and/or its compound into said flame, said at least one metal being selected from the groups IA, IB IIA, IIB IIIA, IIIB, IVA, IVB, VA, and from the rare earth series of the periodic table of elements.

5. The method according to claim 4, **characterized in that** said at least one metal is erbium, ytterbium, neodymium or thulium.

6. The method according to any of the foregoing claims 1-5, **characterized in that** said atomizing gas (20) is introduced into said flame (100) in a concentric or substantially concentric manner with respect to said at least one reactant (10) in liquid form.

7. The method according any of the foregoing claims 1-6, **characterized in that** said atomizing gas (20) is introduced into at least one atomizing gas nozzle (22) comprising at least a portion (24) with a constricted cross-section, the velocity of said atomizing gas (20) being increased by said constricted cross section.

8. The method according to any of the foregoing claims 1-7, **characterized in that** at least said atomizing gas (20) is introduced into a nozzle (22) comprising at least a portion with a diverging cross-section, the velocity of said atomizing gas (20) being increased by said nozzle (22) comprising at least said portion with the diverging cross-section.

9. The method according to claim 8, **characterized in that** said nozzle (22) is a Laval nozzle.

10. The method according to any of the foregoing claims 1-9, **characterized in that** said atomizing gas (20) comprises at least a mixture of a combustible gas and an oxidizing gas

11. The method according to any of the foregoing claims 1-10, **characterized in that** said atomizing gas (20) and/or a further gaseous substance (30, 40) is introduced into said flame through at least one swirl-inducing element (26).

12. The method according to any of the foregoing claims 1-11, **characterized in that** said method further comprises producing an optical waveguide preform (720) comprising at least said light-amplifying optical material.

13. The method according to any of the foregoing claims 1-11, **characterized in that** said method further comprises producing a light-amplifying object comprising at least said light-amplifying optical material.

14. The method according to any of the foregoing claims 1-11, **characterized in that** said method further comprises producing a light-amplifying optical waveguide (750) comprising at least said light-amplifying optical material.

15. The method according to any of the foregoing claims 1-11, **characterized in that** said method further comprises producing a planar optical waveguide comprising at least said light-amplifying optical material.

16. The method according to any of the foregoing claims 1-11, **characterized in that** said method further comprises producing a photonic structure comprising at least said light-amplifying optical material.

**Patentansprüche**

1. Verfahren zur Herstellung eines lichtverstärkenden optischen Materials, wobei das Verfahren Folgendes umfasst:

- Abgeben von Zerstäubergas (20),

- Zerstäuben mindestens eines Reaktionspartners (10) in flüssiger Form durch das Zerstäubergas (20), um Tröpfchen (15) zu bilden,

- Einbringen der Tröpfchen (15) in eine Flamme (100),

- Oxidieren mindestens eines Reaktionspartners (10, 30) in der Flamme, um ein oder mehrere Oxide zu bilden,

- Kondensieren des einen oder der mehreren Oxide, um Teilchen (50) zu bilden, und

- Sammeln mindestens eines Teils der Teilchen (50), wobei die Teilchen (50) des gesammelten Teils miteinander verschmolzen werden, um das lichtverstärkende optische Material zu bilden,

**dadurch gekennzeichnet, dass** das Zerstäubergas (20) mit einer Geschwindigkeit abgegeben wird, die im Bereich des 0,3- bis 1,5-fachen der Schallgeschwindigkeit liegt.

2. Verfahren nach Anspruch 1, **dadurch gekennzeichnet, dass** das Verfahren weiterhin das Einbringen mindestens eines Reaktionspartners, der mindestens Silicium und/oder dessen Verbindung umfasst, in die Flamme umfasst.

3. Verfahren nach Anspruch 2, **dadurch gekennzeichnet, dass** die Siliciumverbindung gasförmiges Siliciumtetrachlorid ist.

4. Verfahren nach einem der vorhergehenden Ansprüche 1 bis 3, **dadurch gekennzeichnet, dass** das Verfahren weiterhin das Einbringen mindestens eines Reaktionspartners, der mindestens ein Metall und/oder dessen Verbindung umfasst, in die Flamme umfasst, wobei das mindestens eine Metall aus den Gruppen IA, IB, IIA, IIB, IIIA, IIIB, IVA, IVB, VA und aus den Seltenerdmetallreihen des Periodensystems der Elemente ausgewählt ist.

5. Verfahren nach Anspruch 4, **dadurch gekennzeichnet, dass** das mindestens eine Metall Erbium, Ytterbium, Neodym oder Thulium ist.

6. Verfahren nach einem der vorhergehenden Ansprüche 1 - 5, **dadurch gekennzeichnet, dass** das Zerstäubergas (20) in konzentrischer oder im Wesentlichen konzentrischer Weise in Bezug auf den mindestens einen Reaktionspartner (10) in flüssiger Form in die Flamme (100) eingebracht wird.

7. Verfahren nach einem der vorhergehenden Ansprüche 1 - 6, **dadurch gekennzeichnet, dass** das Zerstäubergas (20) in mindestens eine Zerstäubergasdüse (22) eingebracht wird, die mindestens einen Abschnitt (24) mit einem verengten Querschnitt umfasst, wobei die Geschwindigkeit des Zerstäubergases (20) durch den verengten Querschnitt erhöht wird.

8. Verfahren nach einem der vorhergehenden Ansprüche 1 - 7, **dadurch gekennzeichnet, dass** das Zerstäubergas (20) in eine Düse (22) eingebracht wird, die mindestens einen Abschnitt mit einem auseinanderlaufenden Querschnitt umfasst, wobei die Geschwindigkeit des Zerstäubergases (20) durch die Düse (22), die mindestens den Abschnitt mit dem auseinanderlaufenden Querschnitt umfasst, erhöht wird.

9. Verfahren nach Anspruch 8, **dadurch gekennzeichnet, dass** die Düse (22) eine Lavaldüse ist.

10. Verfahren nach einem der vorhergehenden Ansprüche 1 - 9, **dadurch gekennzeichnet, dass** das Zerstäubergas (20) mindestens ein Gemisch eines brennbaren Gases und eines oxidierenden Gases umfasst.

11. Verfahren nach einem der vorhergehenden Ansprüche 1 - 10, **dadurch gekennzeichnet, dass** das Zerstäubergas (20) und/oder eine weitere gasförmige Substanz (30, 40) durch mindestens ein Verwirbelungen verursachendes Element (26) in die Flamme eingebracht wird bzw. werden.

12. Verfahren nach einem der vorhergehenden Ansprüche 1 - 11, **dadurch gekennzeichnet, dass** das Verfahren weiterhin das Herstellen einer Lichtwellenleitervorform (720) umfasst, die mindestens das lichtverstärkende optische Material umfasst.

13. Verfahren nach einem der vorhergehenden Ansprüche 1 - 11, **dadurch gekennzeichnet, dass** das Verfahren weiterhin das Herstellen eines lichtverstärkenden Gegenstands umfasst, der mindestens das lichtverstärkende optische Material umfasst.

14. Verfahren nach einem der vorhergehenden Ansprüche 1 - 11, **dadurch gekennzeichnet, dass** das Verfahren weiterhin das Herstellen eines lichtverstärkenden Lichtwellenleiters (750) umfasst, der mindestens das lichtverstärkende optische Material umfasst.

15. Verfahren nach einem der vorhergehenden Ansprüche 1 - 11, **dadurch gekennzeichnet, dass** das Verfahren weiterhin das Herstellen eines planaren Lichtwellenleiters umfasst, der mindestens das lichtverstärkende optische Material umfasst.

16. Verfahren nach einem der vorhergehenden Ansprüche 1 - 11, **dadurch gekennzeichnet, dass** das Verfahren weiterhin das Herstellen einer photonischen Struktur umfasst, die mindestens das lichtverstärkende optische Material umfasst.

**Revendications**

1. Procédé de production d'un matériau optique amplificateur de lumière, ledit procédé comprenant :

   - la décharge d'un gaz d'atomisation (20),
   - l'atomisation d'au moins un réactif (10) sous forme liquide par ledit gaz d'atomisation (20) pour former des gouttelettes (15),
   - l'introduction desdites gouttelettes (15) dans une flamme (100),
   - l'oxydation d'au moins un réactif (10, 30) dans ladite flamme pour former un ou plusieurs oxydes,
   - la condensation desdits un ou plusieurs oxydes pour produire des particules (50), et
   - le recueil d'au moins une partie desdites particules (50), dans lesquelles les particules (50) de ladite partie recueillie sont fusionnées ensemble pour former ledit matériau optique amplificateur de lumière,

   **caractérisé en ce que** ledit gaz d'atomisation (20) est déchargé à une vitesse, qui est dans la gamme de 0,3 à 1,5 fois la vitesse du son.

2. Procédé selon la revendication 1, **caractérisé en ce que** ledit procédé comprend en outre l'introduction d'au moins un réactif comprenant au moins du silicium et/ou son composé dans ladite flamme.

3. Procédé selon la revendication 2, **caractérisé en ce que** ledit composé de silicium est le tétrachlorure de silicium gazeux.

4. Procédé selon l'une quelconque des revendications 1 à 3 précédentes, **caractérisé en ce que** ledit procédé comprend en outre l'introduction d'au moins un réactif comprenant au moins un métal et/ou son composé dans ladite flamme, ledit au moins un métal étant choisi dans les groupes IA, IB IIA, IIB IIIA, IIIB, IVA, IVB, VA, et dans la série des terres rares du tableau périodique des éléments.

5. Procédé selon la revendication 4, **caractérisé en ce que** ledit au moins un métal est de l'erbium, l'ytterbium, le néodyme ou le thulium.

6. Procédé selon l'une quelconque des revendications 1 à 5 précédentes, **caractérisé en ce que** ledit gaz d'atomisation (20) est introduit dans ladite flamme (100) d'une manière concentrique ou sensiblement concentrique par rapport audit au moins un réactif (10) sous forme liquide.

7. Procédé selon l'une quelconque des revendications 1 à 6 précédentes, **caractérisé en ce que** ledit gaz d'atomisation (20) est introduit dans au moins une buse de gaz d'atomisation (22) comprenant au moins une partie (24) avec une section transversale rétrécie, la vitesse dudit gaz d'atomisation (20) étant augmentée par ladite section transversale rétrécie.

8. Procédé selon l'une quelconque des revendications 1 à 7 précédentes, **caractérisé en ce qu'**au moins ledit gaz d'atomisation (20) est introduit dans une buse (22) comprenant au moins une partie avec une section transversale divergente, la vitesse dudit gaz d'atomisation (20) étant augmentée par ladite buse (22) comprenant au moins ladite partie avec la section transversale divergente.

9. Procédé selon la revendication 8, **caractérisé en ce que** ladite buse (22) est une buse de Laval.

**10.** Procédé selon l'une quelconque des revendications 1 à 9 précédentes, **caractérisé en ce que** ledit gaz d'atomisation (20) comprend au moins un mélange d'un gaz combustible et d'un gaz oxydant.

**11.** Procédé selon l'une quelconque des revendications 1 à 10 précédentes, **caractérisé en ce que** ledit gaz d'atomisation (20) et/ou une substance gazeuse supplémentaire (30, 40) est introduit(e) dans ladite flamme à travers au moins un élément générateur de tourbillons (26).

**12.** Procédé selon l'une quelconque des revendications 1 à 11 précédentes, **caractérisé en ce que** ledit procédé comprend en outre la production d'une préforme de guide d'ondes optiques (720) comprenant au moins ledit matériau optique amplificateur de lumière.

**13.** Procédé selon l'une quelconque des revendications 1 à 11 précédentes, **caractérisé en ce que** ledit procédé comprend en outre la production d'un objet amplificateur de lumière comprenant au moins ledit matériau optique amplificateur de lumière.

**14.** Procédé selon l'une quelconque des revendications 1 à 11 précédentes, **caractérisé en ce que** ledit procédé comprend en outre la production d'un guide d'ondes optiques amplificateur de lumière (750) comprenant au moins ledit matériau optique amplificateur de lumière.

**15.** Procédé selon l'une quelconque des revendications 1 à 11 précédentes, **caractérisé en ce que** ledit procédé comprend en outre la production d'un guide d'ondes optiques planaire comprenant au moins ledit matériau optique amplificateur de lumière.

**16.** Procédé selon l'une quelconque des revendications 1 à 11 précédentes, **caractérisé en ce que** ledit procédé comprend en outre la production d'une structure photonique comprenant au moins ledit matériau optique amplificateur de lumière.

600

41  31  21  11   10   20  30   40

24

32

22

12

42

# Fig 1a

600

22

12

# Fig 1b

Fig 2

600

1000

100

720    o ~ 50    710    800

Fig 3a

720

750

Fig 3b

Fig 4

Fig 5

41  31  21        20        30    40

600

22

10                                    10

12

# Fig 6a

600

10                                    10

# Fig 6b

Fig 7a

Fig 7b

Fig 8

600

41  31  21  11   10   20   30   40

22

12

26

42

32

# Fig 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6565823 B
- FI 9900818 W
- WO 0020346 A
- US 6672106 B
- WO 2004002907 A
- US 6079225 A
- US 4003692 A